# EUROPEAN PATENT APPLICATION

(11) **EP 2 846 542 A1**
(43) Date of publication of application: **11.03.2015**
(21) Application number: 13813227.9
(22) Date of filing: 14.03.2013
(51) Int. Cl.: H04N 7/18, B60R 1/00, G08G 1/16

(54) **VEHICLE SURROUNDINGS IMAGE DISPLAY CONTROL DEVICE, VEHICLE SURROUNDINGS IMAGE DISPLAY CONTROL METHOD, AND A PERSISTENT TANGIBLE COMPUTER-READABLE MEDIUM COMPRISING COMMANDS INCLUDING SAID METHOD**

(30) Priority: 04.07.2012 JP 2012150363
(71) Applicant: DENSO CORPORATION, Kariya-city, Aichi 448-8661 (JP)
(72) Inventor: WANG, Bingchen, Kariya-city Aichi 448-8661 (JP); YANAGAWA, Hirohiko, Kariya-city Aichi 448-8661 (JP); TAKEICHI, Masakazu, Kariya-city Aichi 448-8661 (JP)
(74) Representative: Cabinet Plasseraud
(86) International application number: PCT/JP2013/001712
(87) International publication number: WO 2014/006793

(57) **Abstract**

A vehicle surrounding image display control device includes: an acquisition device (110, 115) that acquires captured images around a vehicle; a luminance analyzer (120) that calculates a change amount of luminance in each of multiple determination regions (R21 to R26) in each captured image; a history creation region determination device (125) that selects one determination region, in which the change amount of luminance is smaller than a given threshold value, as a history creation region; and a display control device (135, 140, 145) that controls an image display device (3) to display a history creation image in the history creation region together with a vehicle image at a viewpoint of overlooking from above of the vehicle, changes a relative arrangement of the history creation image with respect to the vehicle image according to a movement amount of the vehicle, and displays the relative arrangement.

## Description

### CROSS REFERENCE TO RELATED APPLICATION

This application is based on Japanese Patent Application No. 2012-150363 filed on July 4, 2012, the disclosure of which is incorporated herein by reference.

### TECHNICAL FIELD

The present disclosure relates to a vehicle surrounding image display control device, a vehicle surrounding image display control method, and a non-transitory tangible computer-readable medium comprising instructions including the method.

### BACKGROUND ART

Up to now, a technique has been known in which vehicle surroundings are repetitively imaged with a camera attached to a vehicle, a captured image is displayed on an image display device in a viewpoint of overlooking the vehicle from above.

In the above technique, a history synthesis technology has been known which moves and displays past captured images of subject-vehicle surroundings according to the amount of movement of the subject vehicle (refer to PTL 1).

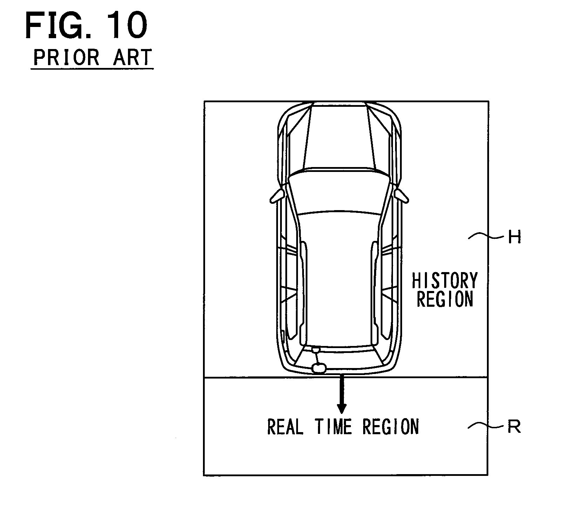

For example, if the camera is a rear camera that images the rear of the vehicle, as illustrated in FIG. 10, a history region H for saving the surrounding bird's-eye view image except for the rear of a vehicle 90, and a real time region R for saving the bird's-eye view image of the rear of the vehicle 90 are provided in a memory. The bird's-eye view image of the latest captured image is overwritten in a real time region R on the memory, display images in the history region H and the real time region R are displayed on the image display device, the movement of the vehicle 90 is calculated with the help of vehicle information (steering angle, vehicle velocity, etc.), and the image moves in the history region H and the real time region R so as to move in a direction opposite to the calculated movement of the vehicle 90.

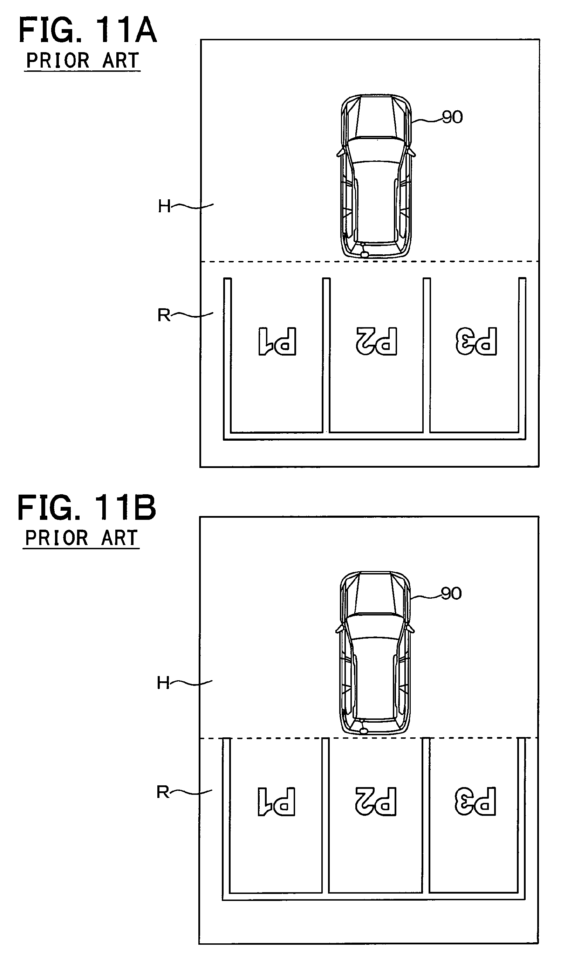

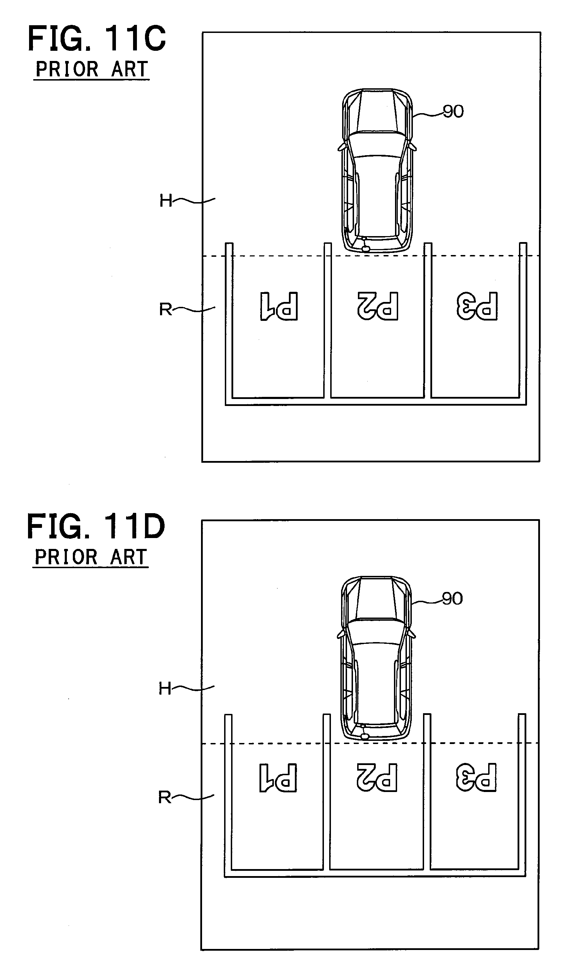

With the repetition of the above processing, in an image displayed on the image display device, for example, when the vehicle 90 travels back, the vehicle 90 travels back in order of FIGS. 11A to 11D, and the image that has been present in the real time region R sequentially moves to the history region H. Therefore, an area of the bird's-eye view image included in the history region H sequentially enlarges, and a display area around the vehicle 90 enlarges.

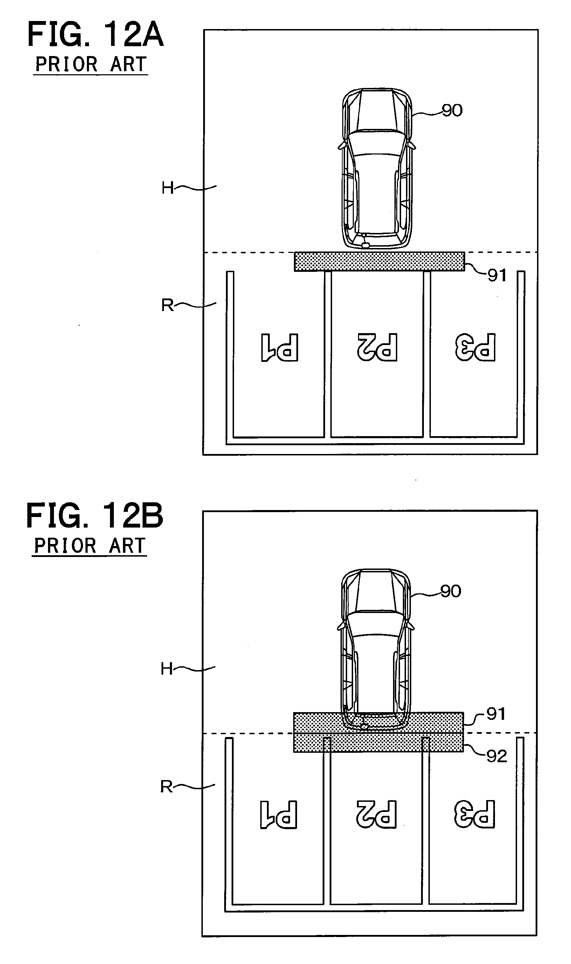

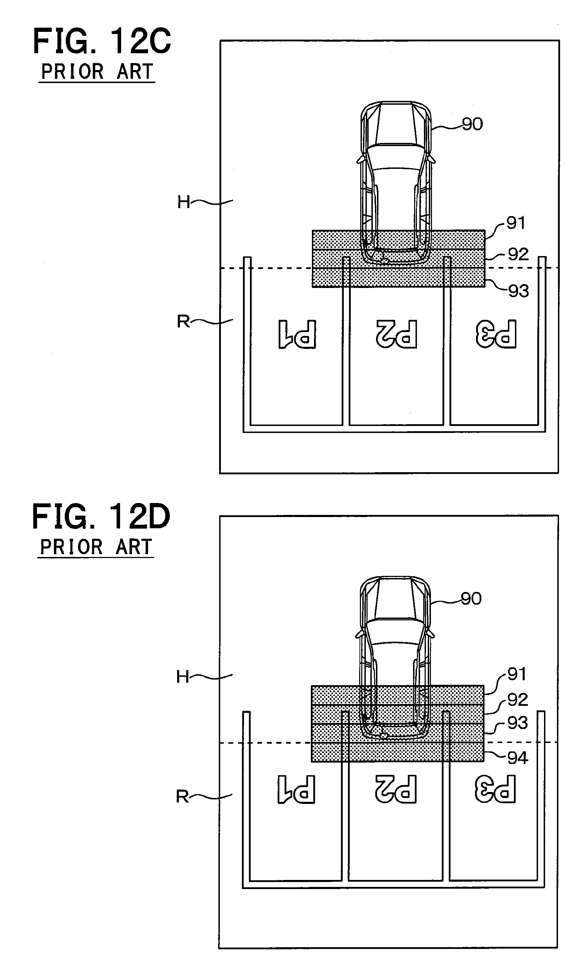

However, in the above-mentioned technique, as exemplified in FIGS. 12A to 12D, if there are luminance change patterns 91 to 94 (for example, shadow of the vehicle 90, a shade change generated by allowing light to be reflected or partially blocked by the vehicle 90) generated in the vicinity of the vehicle 90 due to the presence of the vehicle 90, the luminance change patterns are replicated in the history region H, and continued to move together with the movement of the vehicle 90. Therefore, in the display image displayed on the image display device, the images of the luminance change patterns are enlarged into a striped pattern, resulting into a display image hard to see the surroundings of the vehicle 90.

### PRIOR ART LITERATURES

### PATENT LITERATURE

Patent Literature 1: JP-2002-373327 A

### SUMMARY OF INVENTION

It is an object of the present disclosure to provide a vehicle surrounding image display control device, a vehicle surrounding image display control method, and a non-transitory tangible computer-readable medium comprising instructions including the method. In the vehicle surrounding image display control device, the vehicle surrounding image display control method, and the non-transitory tangible computer-readable medium comprising instructions including the method, in the history synthesis technique where the captured image around the subject vehicle moves according to the amount of movement of the subject vehicle, and is displayed in a viewpoint from above, a likelihood that the luminance change patterns in the vicinity of the subject vehicle are enlarged together with the movement of the vehicle in the display image is reduced.

According to a first aspect of the present disclosure, a vehicle surrounding image display control device includes: an acquisition device that sequentially acquires captured images from an in-vehicle camera that repetitively shoots a surrounding image of a vehicle; a luminance analyzer that calculates a change amount of luminance in each of a plurality of determination regions in each captured image; a history creation region determination device that selects one of the determination regions, in which the change amount of luminance is smaller than a given threshold value, as a history creation region, and excludes another one of the determination regions, in which the change amount of luminance is equal to or larger than the given threshold value, from the history creation region, according to a calculation result of the luminance analyzer; and a display control device that controls an image display device to display a history creation image in the history creation region together with a vehicle image in each of the captured images at a viewpoint of overlooking from above of the vehicle, changes a relative arrangement of the history creation image with respect to the vehicle image according to a movement amount of the vehicle based on vehicle behavior information input from the vehicle, and displays the relative arrangement.

In the above vehicle surrounding image display control device, the amounts of change in luminance within a plurality of determination regions in each of the captured images are calculated, the determination regions in which the amount of change in luminance is smaller than a given threshold value are selected as history creation regions, and the determination regions in which the amount of change in luminance is equal to or larger than the given threshold value are excluded from the history creation regions, thereby being capable of reducing a likelihood that the luminance change patterns in the vicinity of the subject vehicle in the display image together with the movement of the vehicle enlarge.

According to a second aspect of the present disclosure, a vehicle surrounding image display method includes: sequentially acquiring captured images from an in-vehicle camera that repetitively shoots a surrounding image of a vehicle; calculating each change amount of in luminance within a plurality of determination regions in each captured image; selecting one of the determination regions, in which the change amount in luminance is smaller than a given threshold value, as a history creation region, and excluding another one of the determination regions, in which the change amount in luminance is equal to or larger than the given threshold value, from the history creation region, according to a calculation result of the change amount in luminance; and controlling an image display device to display a history creation image in the history creation region together with a vehicle image in each captured image at a viewpoint of overlooking from above of the vehicle, changing a relative arrangement of the history creation image with respect to the vehicle image according to a movement amount of the vehicle based on vehicle behavior information input from the vehicle, and displaying the relative arrangement.

In the above vehicle surrounding image display control method, the amounts of change in luminance within a plurality of determination regions in each of the captured images are calculated, the determination regions in which the amount of change in luminance is smaller than a given threshold value are selected as history creation regions, and the determination regions in which the amount of change in luminance is equal to or larger than the given threshold value are excluded from the history creation regions, thereby being capable of reducing a likelihood that the luminance change patterns in the vicinity of the subject vehicle in the display image together with the movement of the vehicle enlarge.

According to a third aspect of the present disclosure, a non-transitory tangible computer-readable medium comprising instructions being executed by a computer, the instructions including a computer-implemented method for controlling a display of a vehicle surrounding image, the instructions includes: sequentially acquiring captured images from an in-vehicle camera that repetitively shoots a surrounding image of a vehicle; calculating each change amount of luminance within a plurality of determination regions in each captured image; selecting one of the determination regions, in which the change amount in luminance is smaller than a given threshold value, as history creation region, and excluding another one of the determination regions, in which the change amount in luminance is equal to or larger than the given threshold value, from the history creation region, according to a calculation result of the change amount in luminance; and controlling an image display device to display a history creation image in the history creation region together with a vehicle image in each of the captured images at a viewpoint of overlooking from above of the vehicle, changing a relative arrangement of the history creation image with respect to the vehicle image according to a movement amount of the vehicle based on vehicle behavior information input from the vehicle, and displaying the relative arrangement.

In the non-transitory tangible computer-readable medium, the amounts of change in luminance within a plurality of determination regions in each of the captured images are calculated, the determination regions in which the amount of change in luminance is smaller than a given threshold value are selected as history creation regions, and the determination regions in which the amount of change in luminance is equal to or larger than the given threshold value are excluded from the history creation regions, thereby being capable of reducing a likelihood that the luminance change patterns in the vicinity of the subject vehicle in the display image together with the movement of the vehicle enlarge.

According to a fourth aspect of the present disclosure, a vehicle surrounding image display control device includes: an acquisition device that sequentially acquires captured images from an in-vehicle camera that repetitively shoots a surrounding image of a vehicle; a memory having a real time region that stores each captured image acquired from the in-vehicle camera and a history region that stores the history images; a luminance analyzer that calculates each change amount of luminance within a plurality of determination regions in each captured image stored in the real time region; a history creation region determination device that selects one of the determination regions, in which the change amount in luminance is smaller than a given threshold value, as history creation regions, and excludes another one of the determination regions, in which the change amount in luminance is equal to or larger than the given threshold value, from the history creation region, according to a calculation result of the luminance analyzer; and a display control device that stores a history creation image of the history creation region in a first sub-history region of the history region of the memory, overwrites the history creation image of the first sub-history region in a second sub-history region of the history region of the memory according to a movement amount of the vehicle based on vehicle behavior information input from the vehicle, and controls an image display device to display the history image of the second sub-history region and the history image of the first sub-history region at a viewpoint of overlooking from above of the vehicle.

In the above vehicle surrounding image display control device, the amounts of change in luminance within a plurality of determination regions in each of the captured images are calculated, the determination regions in which the amount of change in luminance is smaller than a given threshold value are selected as history creation regions, and the determination regions in which the amount of change in luminance is equal to or larger than the given threshold value are excluded from the history creation regions, thereby being capable of reducing a likelihood that the luminance change patterns in the vicinity of the subject vehicle in the display image together with the movement of the vehicle enlarge.

### BRIEF DESCRIPTION OF DRAWINGS

The above and other objects, features and advantages of the present disclosure will become more apparent from the following detailed description made with reference to the accompanying drawings. In the drawings:
[FIG. 1] FIG. 1 is a diagram illustrating a configuration of a vehicle surrounding image display system according to an embodiment;
[FIG. 2] FIG. 2 is a diagram illustrating a positional relationship of an image stored in a real time region R of a memory to a vehicle;
[FIG. 3] FIG. 3 is a diagram illustrating a positional relationship of an image stored in a history region of the memory to the vehicle;
[FIG. 4] FIG. 4 is a configuration diagram of a display image;
[FIG. 5] FIG. 5 is a flowchart of processing to be executed by a control device;
[FIG. 6] FIG. 6 illustrates an example of a mean luminance distribution graph of a second sub-real time region;
[FIG. 7] FIG. 7 is a diagram illustrating into which region of a first sub-history region a history creation region is copied;
[FIG. 8A] FIG. 8A is a diagram illustrating a display image created in a first execution opportunity;
[FIG. 8B] FIG. 8B is a diagram illustrating a display image created in a second execution opportunity;
[FIG. 8C] FIG. 8C is a diagram illustrating a display image created in a third execution opportunity;
[FIG. 8D] FIG. 8D is a diagram illustrating a display image created in a fourth execution opportunity;
[FIG. 8E] FIG. 8E is a diagram illustrating a display image created in a fifth execution opportunity;
[FIG. 8F] FIG. 8F is a diagram illustrating a display image created in a sixth execution opportunity;
[FIG. 9A] FIG. 9A is a diagram illustrating a state in which an image of a second real time region is copied into the first sub-history region in the first execution opportunity;
[FIG. 9B] FIG. 9B is a diagram illustrating a state in which the image of the second real time region is copied into the first sub-history region in the second execution opportunity;
[FIG. 9C] FIG. 9C is a diagram illustrating a state in which the image of the second real time region is copied into the first sub-history region in the third execution opportunity;
[FIG. 9D] FIG. 9D is a diagram illustrating a state in which the image of the second real time region is copied into the first sub-history region in the fourth execution opportunity;
[FIG. 9E] FIG. 9E is a diagram illustrating a state in which the image of the second real time region is copied into the first sub-history region in the fifth execution opportunity;
[FIG. 9F] FIG. 9F is a diagram illustrating a state in which the image of the second real time region is copied into the first sub-history region in the sixth execution opportunity;
[FIG. 10] FIG. 10 is a diagram illustrating a history region and a real time region in a memory in a prior art;
[FIG. 11A] FIG. 11A is a diagram illustrating a synthesized bird's-eye view image that changes together with the backing of the vehicle in the prior art;
[FIG. 11B] FIG. 11B is a diagram illustrating a synthesized bird's-eye view image that changes together with the backing of the vehicle in the prior art;
[FIG. 11C] FIG. 11C is a diagram illustrating a synthesized bird's-eye view image that changes together with the backing of the vehicle in the prior art;
[FIG. 11D] FIG. 11D is a diagram illustrating a synthesized bird's-eye view image that changes together with the backing of the vehicle in the prior art;
[FIG. 12A] FIG. 12A is a diagram illustrating a synthesized bird's-eye view image that changes together with the backing of the vehicle when there is a luminance change pattern caused by the vehicle in the prior art;
[FIG. 12B] FIG. 12B is a diagram illustrating a synthesized bird's-eye view image that changes together with the backing of the vehicle when there is a luminance change pattern caused by the vehicle in the prior art;
[FIG. 12C] FIG. 12C is a diagram illustrating a synthesized bird's-eye view image that changes together with the backing of the vehicle when there is a luminance change pattern caused by the vehicle in the prior art; and
[FIG. 12D] FIG. 12D is a diagram illustrating a synthesized bird's-eye view image that changes together with the backing of the vehicle when there is a luminance change pattern caused by the vehicle in the prior art.

### EMBODIMENTS FOR CARRYING OUT INVENTION

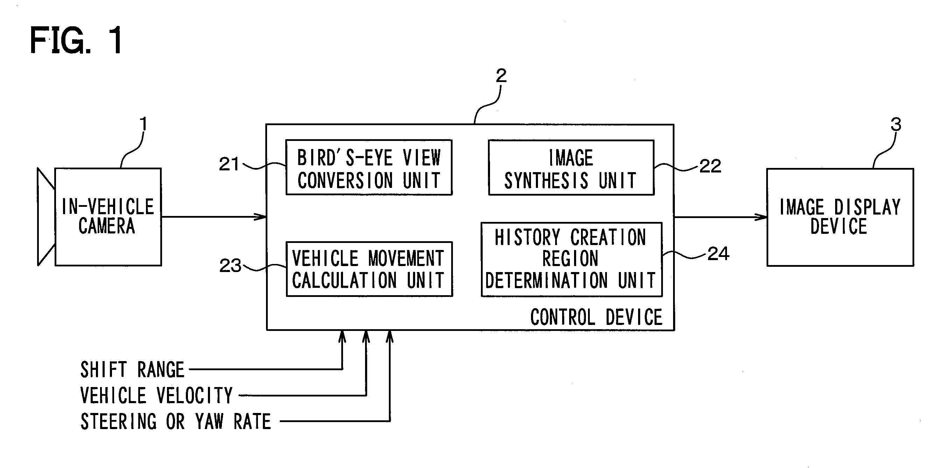

An embodiment will be described below. As illustrated in FIG. 1, a vehicle surrounding image display system according to this embodiment is mounted in a vehicle, and includes an in-vehicle camera 1, a control device 2 (corresponding to an example of a vehicle surrounding image display control device), and an image display device 3.

The in-vehicle camera 1 is mounted fixedly to the vicinity of a rear end of the vehicle. The in-vehicle camera 1 images the surroundings of the vehicle, specifically, a given area in the rear of the vehicle, repetitively (for example, in a cycle of 1/30 seconds), and sequentially outputs data of captured images of the given area obtained as a result of imaging to the control device 2.

The control device 2 repetitively receives the captured images from the in-vehicle camera 1. The control device 2 also repetitively receives information on a shift range, information on a vehicle speed, and information on a steering angle (or yaw rate) from the subject vehicle.

The control device 2 executes predetermined processing to function as a bird's-eye view conversion unit 21, an image synthesis unit 22, a vehicle movement calculation unit 23, and a history creation region determination unit 24.

The bird's-eye view conversion unit 21 subjects the captured image received from the in-vehicle camera 1 to known bird's-eye view conversion to convert the captured image into a bird's-eye view image in a viewpoint of overlooking the subject vehicle from above (directly below or diagonally below).

As will be described later, the image synthesis unit 22 synthesizes a bird's-eye view image of a latest captured image, and a bird's-eye view image of a past captured image, and outputs a synthesized bird's-eye view image resulting from the synthesis as a display image to the image display device 3.

The vehicle movement calculation unit 23 calculates the movement (the amount of movement and a variation in the posture) of the subject vehicle conforming to a known Ackerman model on the basis of information on a shift range, information on a vehicle speed, and information on a steering angle (or yaw rate) which are input from the subject vehicle.

The history creation region determination unit 24 determines which region of the latest captured image is set as the history creation region. The control device 2 configured as described above may be formed of, for example, a known microcomputer.

The image display device 3 is a device for displaying the display image input from the control device 2, and arranged at a position where a driver within the vehicle can watch the displayed display image (that is, synthesized bird's-eye view image).

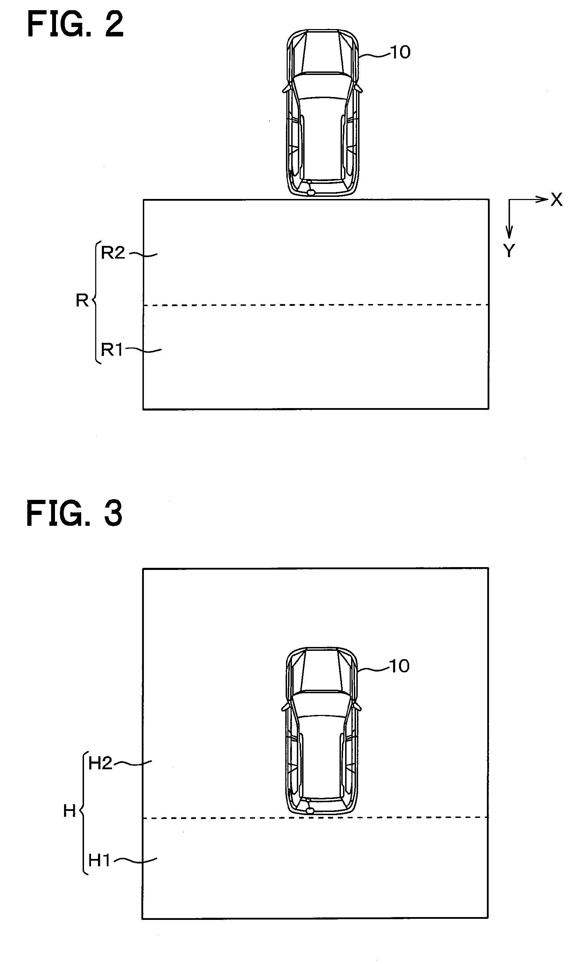

Hereinafter, a description will be given of the actuation of the vehicle surrounding image display system configured as described above. A writable memory (for example, RAM) installed in the control device 2 ensures a real time region R illustrated in FIG. 2, and a history region H illustrated in FIG. 3, in advance.

The respective addresses within the real time region R and the history region H are allocated with relative positions to a subject vehicle 10 virtually arranged. FIGS. 2 and 3 illustrate positional relationships between the respective addresses of the real time region R and the history region H, and the subject vehicle 10.

As will be described later, the real time region R represents a region for storing an image obtained by subjecting a part of the latest captured image captured by the in-vehicle camera 1 to bird's-eye view conversion, and is divided into a first sub-real time region R1 and a second sub-real time region R2.

As illustrated in FIG. 2, the respective addresses in the real time region R correspond to any positions on a road surface within a rectangular solid line area in the immediate rear of the subject vehicle 10 one-to-one, and the overall rectangular solid line area is covered with the overall addresses of the real time region R.

The first sub-real time region R1 covers a rectangular region on the road surface on a far side of the real time region R, and the second sub-real time region R2 covers a rectangular region on the road surface on a near side of the real time region R.

The history region H represents a region for storing the images obtained by subjecting both of the latest captured image and the non-latest captured image of the captured image of the in-vehicle camera 1 to bird's-eye view conversion, and is divided into a first sub-history region H1 and a second sub-history region H2.

As illustrated in FIG. 3, the respective addresses in the history region H correspond to any positions on a road surface within a rectangular solid line area in the immediate rear of the subject vehicle 10 one-to-one, and the overall rectangular solid line area is covered with the overall addresses of the history region H.

The first sub-history region H1 covers a rectangular region on the road surface in the immediate rear of the subject vehicle 10 in the history region H, and a relative position area of the cover area of the first sub-history region H1 to the subject vehicle 10 is identical with a cover area of the second sub-real time region R2.

Also, as illustrated in FIG. 3, the second sub-history region H2 covers a rectangular area on the road surface at a position that cannot be currently captured by the in-vehicle camera 1 in the history region H, that is, an area of a road surface immediately below the subject vehicle 10, and areas on the road surface in front of and on sides of the subject vehicle 10. Therefore, the bird's-eye view images stored in the second sub-history region H2 represent bird's-eye view images obtained by subjecting the past captured images which are not latest to the bird's-eye view conversion in the captured images captured by the in-vehicle camera 1.

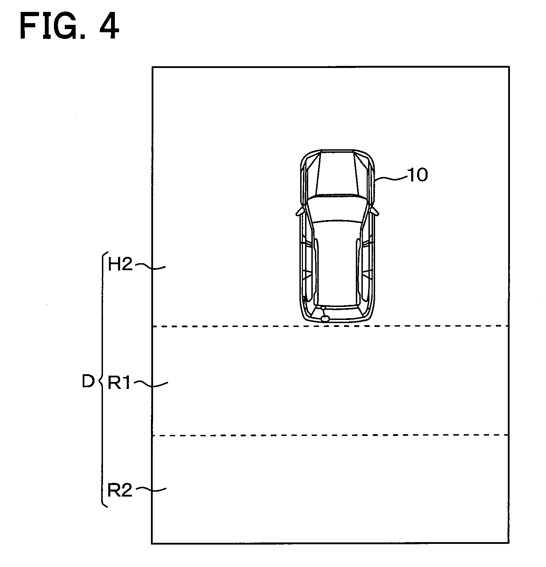

A display image D illustrated in FIG. 4 is synthesized on the basis of the image stored in the real time region R and the history region H, and displayed on the image display device 3. Specifically, an image into which a bird's-eye view image in the second sub-history region H2, a bird's-eye view image in the first sub-real time region R1, and a bird's-eye view image in the second sub-real time region R2 are connected to each other in a layout illustrated in FIG. 4 forms the display image D.

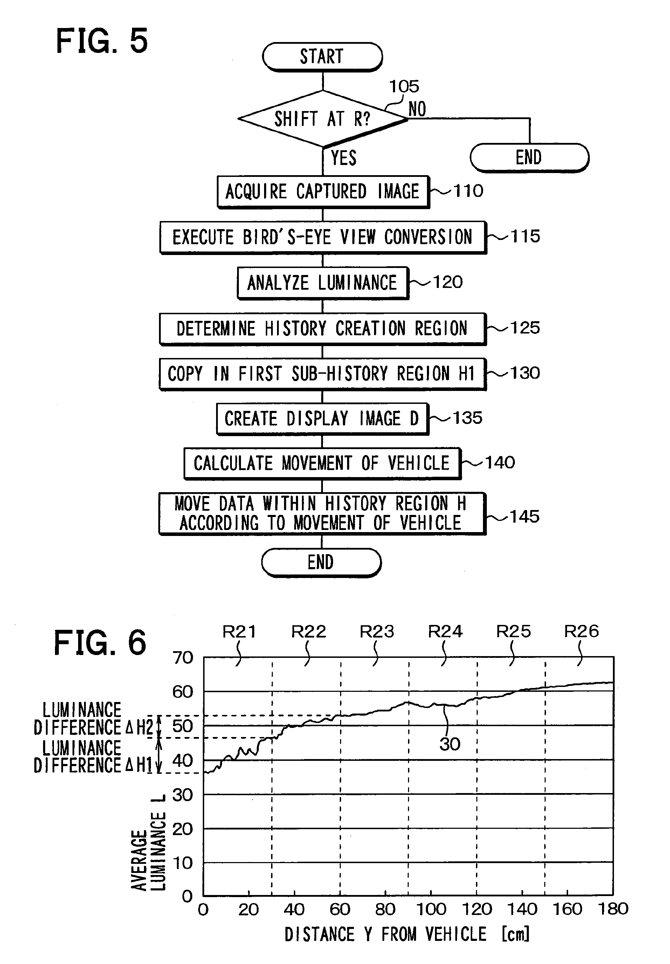

The control device 2 repetitively (specifically, for each of given control periods) executes the processing illustrated in a flowchart of FIG. 5 with the use of the real time region R and the history region H. The control period may be, for example, 250 msec. The control device 2 executes the processing of FIG. 5 to function as the bird's-eye view conversion unit 21, the image synthesis unit 22, the vehicle movement calculation unit 23, and the history creation region determination unit 24.

The processing in FIG. 5 will be described below. First, when the control device 2 starts the processing of FIG. 5, the respective regions of the real time region R and the history region H are in an empty state where the bird's-eye view image data is not included at all, in other words, in a state where only data indicative of empty is included.

In the respective execution opportunities of the processing in FIG. 5, the control device 2 determines whether a shift position of the subject vehicle is reverse (back position), or not, on the basis of the input latest shift range information in Step 105. If the shift position is not reverse, the control device 2 stops the display image D from being output to the image display device, clears data in the respective regions of the real time region R and the history region H to zero, and thereafter completes the current processing in FIG. 5.

When the driver is to park the subject vehicle in a parking square of a parking area, it is assumed that the driver puts the shift range to R (reverse). Then, the control device 2 determines that the shift position is reverse in Step 105, and proceeds to Step 110.

In Step 110, the control device 2 acquires one latest captured image input from the in-vehicle camera 1. Then, in Step 115, the control device 2 subjects the latest captured image acquired in previous Step 110 to known bird's-eye view conversion. With the above bird's-eye view conversion, the captured image is converted into the bird's-eye view image in a viewpoint of overlooking the subject vehicle from above (directly below or diagonally below).

In the bird's-eye view conversion, it is assumed that an object in the captured image is present at a position where the height is zero (that is, flat road surface) as well known. A conversion expression used for the bird's-eye view conversion is recorded in a memory (for example, ROM) of the control device 2 in advance.

Also, since the bird's-eye view image is changed by subjecting a pixel arrangement of the captured image to the bird's-eye view conversion, the bird's-eye view image is one form of the captured images.

In Step 115, the bird's-eye view image of a given portion which is a cover area of the real time region R in FIG. 2 is cut out of the created bird's-eye view image, and the respective pixels in the cut portion is stored in the real time region R so that the respective pixels match the relative positions allocated to the respective addresses in the real time region R.

More specifically, the cut portion is divided into two front and back portions of the subject vehicle 10. An image of a given area of one of those two portions farther from the subject vehicle 10 (for example, a portion farther from the subject vehicle 10 by 1.8 m or more) is stored in the first sub-real time region R1, and an image of a given area of the other of those two divided portions closer to the subject vehicle 10 (for example, a portion distant from the subject vehicle 10 by less than 1.8 m) is stored in the second sub-real time region R2.

The control device 2 executes the processing in Step 115 to function as the bird's-eye view conversion unit 21.

In subsequent Step 120, luminance analysis is conducted on the bird's-eye view image stored in the second sub-real time region R2. The luminance analysis is a process for calculating the amount of change in luminance (not temporal variation, but spatial variation) within the plural determination regions in the second sub-real time region R2.

In this embodiment, as the luminance analysis, a distribution 30 of a mean luminance L exemplified in FIG. 6 is calculated for a pixel group stored in a matrix arrangement in vertical and horizontal directions in the second sub-real time region R2.

The axis of abscissa in a graph of FIG. 6 represents a direction of travel behind 0 in FIG. 2, and the axis of ordinate represents a mean luminance L(Y) at each Y-coordinate value (distance from the subject vehicle 10 along the Y-coordinate axial direction). In this example, the mean luminance L at a certain Y coordinate value represents a mean luminance of the pixel group which is arranged at a position of the Y coordinate value, and aligned in an X-coordinate axial direction in FIG. 2 (a direction orthogonal to the Y coordinate axis, and which is a horizontal direction of the subject vehicle 10).

A range (from 0 cm to 180 cm) of the Y coordinate value of the second sub-real time region R2 is divided into six equal parts by a distance to set six determination regions "R21 to R26). The amount of change in the above mean luminance L(Y) within the determination region is calculated for each of the determination regions R21 to R26.

In this embodiment, a difference (luminance difference) between a maximum value and a minimum value of the mean luminance L(Y) within the determination regions is applied as the amount of change. For example, in the example of FIG. 6, a luminance difference of the determination region R21 becomes ΔH1, and a luminance difference of the determination region R22 becomes ΔH2. For example, a standard deviation of the luminance of the mean luminance L(Y) within the determination region may be used as the amount of change of the mean luminance L(Y) within the determination region.

Subsequently, in Step 125, the history creation regions are determined on the basis of previous calculation results (that is, the amount of change of the mean luminance L(Y) in each of the determination regions R21 to R26) in Step 120. The control device 2 executes the processing in Step 125 to function as the history creation region determination unit 24.

The determination of the history creation regions in Step 125 is conducted as follows. First, all of the determination regions R21 to R26 are set as the history creation regions. Then, the region R21 closest to the subject vehicle 10 in the determination regions R21 to R26 is intended for determination.

It is determined whether the amount of change in the mean luminance L(Y) in the determination region R21 to be determined is equal to or larger than a given threshold value, or not. If the amount of change is equal to or larger than the given threshold value, the determination region R21 is excluded from the history creation region, and the determination target is changed to the determination region R22 closest to the subject vehicle 10 next to the region R21 to be currently determined.

Subsequently, likewise, it is determined whether the amount of change in the mean luminance L(Y) in the determination region to be determined is equal to or larger than a given threshold value, or not. If the amount of change is equal to or larger than the threshold value, the determination region is excluded from the history creation region, and the determination target is changed to the determination region closest to the subject vehicle 10 next to the region to be currently determined. This process is repeated until the amount of change in the mean luminance L(Y) is compared with the threshold value for all of the determination regions 21 to 26. Thereafter, the processing of Step 125 is completed.

If it is determined that the amount of change in the mean luminance L(Y) in the determination region to be determined is not equal to or larger than the threshold value (smaller than the threshold value) for any one of the determination regions 21 to 26, the processing in Step 125 is completed immediately at that time.

With the processing of Step 125, the regions in which the amount of change in the mean luminance L(Y) is equal to or larger than the threshold value among the determination regions 21 to 26 are present continuously in the rear of the subject vehicle 10 from the determination region 21, and those determination regions present continuously are excluded from the history creation regions. Then, the determination region in which the amount of change in the mean luminance L(Y) becomes first smaller than the threshold value in order from the closest side to the subject vehicle 10 among the determination regions 21 to 26, and the determination regions farther from the subject vehicle 10 than that determination region are left to be included in the history creation regions.

For example, if the amount of change in the determination regions 21, 22, and 26 is equal to or larger than the threshold value among the amount of change in the mean luminance L(Y) of the determination regions 21 to 26, the determination regions 21 and 22 are not set as the history creation regions, but the determination regions 23 to 26 are included in the history creation regions.

Subsequently, in Step 130, the bird's-eye view images in the regions which become the history creation regions among the determination regions 21 to 26 are copied into the first sub-history region H1.

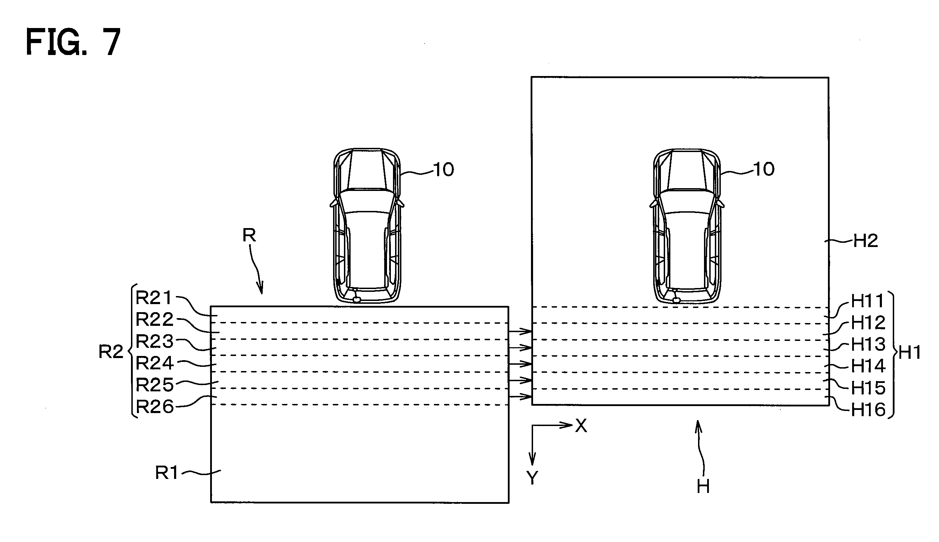

Specifically, as illustrated in FIG. 7, in the first sub-history region H1, a range (from 0 cm to 180 cm) of the Y coordinate value along the Y coordinate axial direction of FIG. 7 (a direction of travel behind the subject vehicle 10 along the longitudinal direction of the subject vehicle 10) is divided in distance into six equal parts to set six copy destination regions H11 to H16.

The bird's-eye view images in the determination regions that become the history creation regions among the determination regions R21 to R26 are selected as the history creation images, and the selected history creation images are copied over into the copy destination region having the same distance from the subject vehicle 10. In the example of FIG. 7, only the regions R22 to R26 in the determination regions R21 to R26 are the history creation regions, and the bird's-eye view images in the regions R22 to R26 are copied into the copy destination regions H12 to H16 that cover the same positions in the first sub-history region H1 in the same relative arrangement, respectively.

Subsequently, the display image D is created in Step 135. Specifically, as illustrated in FIG. 4, the second sub-history region H2, the first sub-real time region R1, and the second sub-real time region R2 are connected to each other to synthesize the images within the respective regions H2, R1, and R2 as illustrated in Fig. 4, and a given subject vehicle image 10 expressing the subject vehicle 10 is superimposed at a virtual position of the subject vehicle 10 of the synthesized image.

The bird's-eye view image (image captured by the in-vehicle camera 1 in past) within the second sub-history region H2 is transmissively displayed also at the position on which the image for the subject vehicle is superimposed.

The display image D obtained as a result of the above synthesis and superposition is input to the image display device 3 from the control device 2 every time the display image D is produced, as a result of which the image display device 3 displays the display image D on the driver.

When viewing the display image D, the driver can confirm the surroundings of the subject vehicle 10 in a viewpoint of overlooking the subject vehicle 10 from above. Further, a hidden portion actually covered with the subject vehicle 10 can be viewed through the subject vehicle 10 from above. The control device 2 executes the processing of Step 135 to function as the image synthesis unit 22.

Then, the amount of movement (a movement vector and a posture change angle) of the subject vehicle conforming to the known Ackerman model is calculated on the basis of various vehicle behavior information input from the subject vehicle 10, that is, the latest information (past information is additionally used) of information on a shift range, information on a vehicle speed, and information on a steering angle (or yaw rate) in Step 140. In the present specification, the amount of movement represents the amount of movement indicative of the movement (that is, the amount of movement at acquisition intervals of the captured images) of the vehicle in a period (that is, previous control period) from an acquisition timing (execution opportunity of the previous processing in FIG. 5) of the previously captured image to an acquisition timing (execution opportunity of the current processing in FIG. 5) of the presently captured image. The control device 2 executes the processing in Step 140 to function as the vehicle movement calculation unit 23.

Subsequently, the amount of relative movement indicative of how the surroundings (assuming that the circumferences are fixed to a road surface) of the subject vehicle move relative to the subject vehicle is calculated in Step 145 on the basis of the amount of movement of the subject vehicle calculated in previous Step 140.

Specifically, the movement reverse to the amount of movement of the subject vehicle calculated in previous Step 140 is calculated. For example, when the movement vector of the subject vehicle is (α, β), and the posture change angle is θ, it is assumed that the amount of relative movement of the surroundings relative to the subject vehicle is (-α, -β) in the movement vector, and -θ in the posture change angle.

Then, all of the pixels (naturally also including the pixels of the history creation images) stored in the history region H moves so that the bird's-eye view images within the history region H reflect the arrangement around the subject vehicle at a subsequent display timing (execution timing of Step 135 of execution opportunity of the subsequent processing in FIG. 5) according to the amount of relative movement of the surroundings calculated as described above within the history region H. In this way, a relative arrangement of the history creation images to the virtual position of the subject vehicle 10 is determined according to the amount of movement of the vehicle.

As a result, a part of the bird's-eye view image moves from the first sub-history region H1 to the second sub-history region H2, or from the second sub-history region H2 to the first sub-history region H1 in a boundary between the first sub-history region H1 and the second sub-history region H2 according to the amount of relative movement. In this case, since the subject vehicle is backed, the former case is applied. Therefore, the bird's-eye view images increase within the second sub-history region H2 that has been empty at the time of beginning of the processing in FIG. 3 while the vehicle is backed. One processing in FIG. 5 is completed after Step 145.

The control device 2 repetitively executes the above-mentioned processing in FIG. 5 for each of the control periods to sequentially acquire the captured image from the in-vehicle camera for each of the control periods (Step 110), sequentially subjects the captured images sequentially acquired to the bird's-eye view conversion into the bird's-eye view image for each of the control periods to store the bird's-eye view image over the real time region R (Step 115), and sequentially conducts the luminance analysis on the bird's-eye view image that has been sequentially subjected to the bird's-eye view conversion for each of the control periods (Step 120). In each luminance analysis, the amount of change in luminance within the plural determination regions R21 to R26 in the real time region R is calculated.

The control device 2 sequentially conducts a process of selecting the determination regions in which the amount of change in luminance is lower than the given threshold value in the plural determination regions R21 to R26 as the history creation regions on the basis of the results of the luminance analysis, and excluding the determination regions in which the amount of change in luminance is equal to or larger than the given threshold value from the history creation regions for each of the control periods (Step 125).

Then, the control device 2 sequentially copies the bird's-eye view images sequentially selected within the history creation regions into the first sub-history region H1 for each of the control periods as the history creation images (Step 130). The control device 2 allows the display image D obtained by synthesizing the image in the second sub-history region H2, and the image and the subject vehicle in the real time region R to be sequentially displayed on the image display device 3 for each of the control periods (Step 135). The control device 2 sequentially calculates the amount of movement of the subject vehicle 10 on the basis of the vehicle behavior information repetitively input from the vehicle for each of the control periods (Step 140). The control device 2 moves the images within the history region H so that the relative arrangement to the subject vehicle 10 of the copied history creation images is changed according to the calculated amount of movement to sequentially determine the relative arrangement for each of the control periods (Step 145).

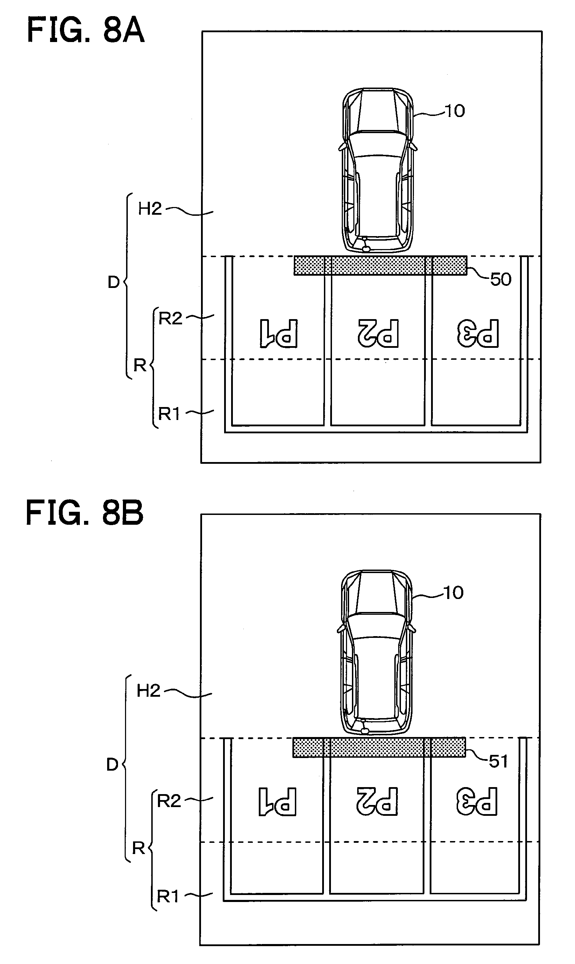

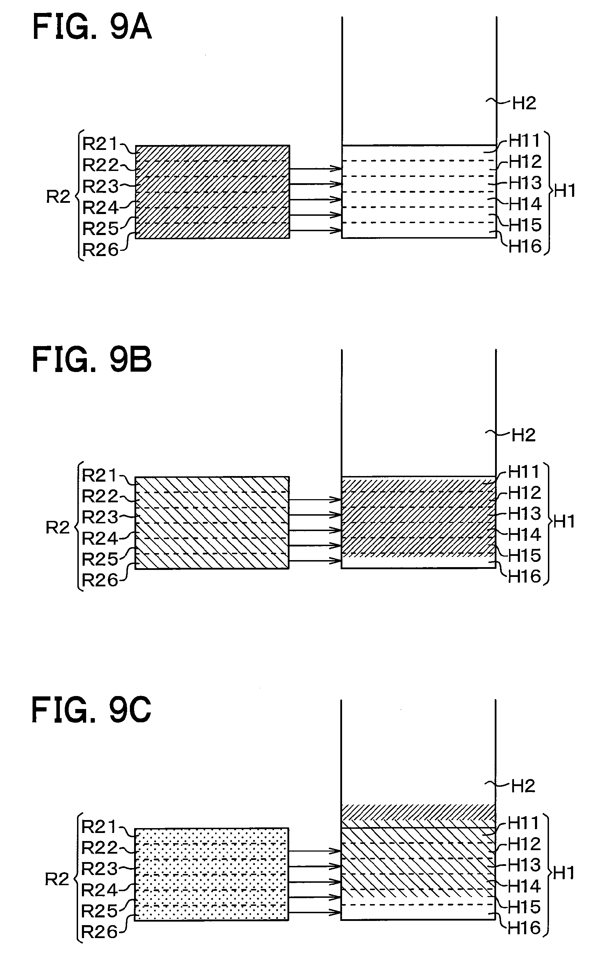

Hereinafter, a description will be given of the operation of repetitively conducting the above-mentioned processing of FIG. 5 by the control device 2 for each of the control periods as one example with reference to FIGS. 8A to 8F and 9A to 9F.

First, it is assumed that in order to park the subject vehicle 10 in a parking square (parking square P2 in FIG. 8A), the driver stops the subject vehicle 10 in the vicinity of the parking square P2, and switches the shift position to reverse.

Then, the control device 2 determines that the shift position is reverse in Step 105 at the execution opportunity of the first processing in FIG. 5 after the shift position has switched to reverse to proceed to Step 110, acquires the latest captured image from the in-vehicle camera 1 in Step 110, subjects the captured images to the bird's-eye view conversion in Step 115, and cuts a part of the resultant bird's-eye view image to store the cut part over the real time region R.

In this situation, as illustrated in FIG. 8A, a luminance change pattern image 50 in which the luminance change is considerable is included in the immediate rear of the subject vehicle 10 in the bird's-eye view images recorded in the second sub-real time region R2. The luminance change pattern image 50 is an image in which a luminance change generated in the vicinity of the subject vehicle 10 caused by the presence of the subject vehicle 10 (for example, shadow of the vehicle, a shade change generated by allowing light to be reflected or partially blocked by the vehicle) is captured. This luminance change pattern image 50 has a property that moves together with the subject vehicle 10 in association with the subject vehicle 10.

In Step 120 subsequent to Step 115, the luminance analysis is conducted on the second sub-real time region R2 including the luminance change pattern image 50. In this example, it is assumed that the luminance change pattern image 50 is included in a determination region R21 in the second sub-real time region R2, as a result of which the amount of change in the mean luminance L(Y) in the determination region R21 exceeds the threshold value whereas the amount of change in the mean luminance L(Y) in the determination regions R22 to R26 is smaller than the above threshold value.

Therefore, in subsequent Step 125, the determination region R21 is excluded as the history creation region, and only the determination regions R22 to R26 are selected as the history creation regions. Then, in Step 130, as illustrated in FIG. 9A, only the bird's-eye view images in the determination regions R22 to R26 are copied over the copy destination regions H12 to H16, respectively.

In subsequent Step 135, as illustrated in FIG. 8A, the image in the second sub-history region H2 is synthesized in the image of the current real time region R, and the image on which the vehicle image is further transparently superimposed at the virtual position of the subject vehicle 10 is created as the display image D.

At this point, the second sub-history region H2 is in an empty state where data of the bird's-eye view image is not included at all. Therefore, only background colors such as white, black, and blue are displayed in a portion of the second sub-history region H2 of the display image D.

In subsequent Step 140, as has already been described, the movement of the vehicle in the previous period for the control period is calculated. In this example, it is assumed that the subject vehicle 10 backs straight 24 cm (corresponding to 0.8 times of a vertical width of the determination region) in this period. Therefore, in Step 145, the image moves forward within the history region H by the amount (24 cm) corresponding to the amount of movement of the subject vehicle 10. In this way, a relative arrangement of the history creation images to the virtual position of the subject vehicle 10 is determined according to the amount of movement of the vehicle.

Thereafter, when a second execution opportunity in the processing of FIG. 5 comes after the shift position switches to reverse, the control device 2 proceeds to Step 110 from Step 105. The control device 2 acquires the latest captured images from the in-vehicle camera 1 in Step 110, subjects the captured images to the bird's-eye view conversion in Step 115, and cuts a part of the resultant bird's-eye view image to store the cut part over the real time region R.

In this situation, as illustrated in FIG. 8B, a luminance change pattern image 51 in which the luminance change is considerable is included in the immediate rear of the subject vehicle 10 in the bird's-eye view images recorded in the second sub-real time region R2. Since the luminance change pattern image 51 is an image generated due to the same cause as that of the luminance change pattern image 50 appearing in the second sub-real time region R2 at the previous execution opportunity in the processing of FIG. 5, the arrangement to the subject vehicle 10 is substantially identical with the luminance change pattern image 50.

In Step 120 subsequent to Step 115, the luminance analysis is conducted on the second sub-real time region R2 including the luminance change pattern image 51. In this example, it is assumed that, as a result of the luminance analysis, a magnitude relationship between the amounts of change in the mean luminance L(Y) in the respective determination regions R21 to R26, and the above threshold value is identical with that in Step 120 of the previous execution opportunity.

Therefore, in subsequent Step 125, the determination region R21 is excluded as the history creation region, and only the regions R22 to R26 are selected as the history creation regions. Then, in Step 130, as illustrated in FIG. 9B, only the bird's-eye view images in the determination regions R22 to R26 are copied over the copy destination regions H12 to H16, respectively.

The bird's-eye view image copied from the second sub-real time region R2 in the previous execution opportunity in the processing of FIG. 5 moves to the copy destination region H 11 that is not an overwrite copy destination at this time through the processing of Step 145 at the previous execution opportunity in the processing of FIG. 5.

In subsequent Step 135, as illustrated in FIG. 8B, the image in the second sub-history region H2 is synthesized in the image of the current real time region R, and the image on which the vehicle image 10 is further transparently superimposed is created as the display image D.

At this point, in Step 145 of the previous execution opportunity in FIG. 5, the position (relative arrangement to the virtual position of the subject vehicle 10) of the history creation images changes in the history region H. Therefore, the image moves from the first sub-history region H1 to the second sub-history region H2.

However, the moved image is the image (empty image) in the copy destination region H11 in which the bird's-eye view image has not been copied. Therefore, at this point, the second sub-history region H2 is in an empty state where data of the bird's-eye view image is not yet included at all.

If the determination region R21 is included in the history creation region in Step 125 of the previous execution opportunity in FIG. 5, the bird's-eye view image (including the luminance change pattern image 50) in the determination region R21 is copied into the copy destination region H11 in Step 130, and the bird's-eye view image (including the luminance change pattern image 50) is to have entered the second history region H2 in Step 145.

If the above processing has been achieved, the luminance change pattern image 50 is included in the display image in Step 135 at the current execution opportunity of FIG. 5, and the image (luminance change pattern image 50) that expresses the luminance change which is not there in fact continues to be displayed while moving together with the movement of the subject vehicle 10 as in the conventional art.

In this embodiment, the amount of change in the mean luminance L(Y) in the determination regions is compared with the threshold value to find the luminance change pattern image 50 generated by the presence of the subject vehicle 10 in the vicinity of the subject vehicle 10, and the determination regions including the found luminance change pattern image 50 are excluded from the history creation regions. As a result, the likelihood that the luminance change pattern image 50 continues to remain within the display image D to deteriorate the visibility of the display image D can be reduced.

In subsequent Step 140, as has already been described, the movement of the vehicle in the previous period for the control period is calculated. In this example, it is assumed that the subject vehicle 10 backs straight 45 cm (corresponding to 1.5 times of a vertical width of the determination region) in this period. Therefore, in Step 145, the image moves forward within the history region H by the amount (45 cm) corresponding to the amount of movement of the subject vehicle 10. In this way, a relative arrangement of the history creation images to the virtual position of the subject vehicle 10 is determined according to the amount of movement of the vehicle.

Thereafter, when a third execution opportunity in the processing of FIG. 5 comes after the shift position switches to reverse, the control device 2 proceeds to Step 110 from Step 105. The control device 2 acquires the latest captured images from the in-vehicle camera 1 in Step 110, subjects the captured images to the bird's-eye view conversion in Step 115, and cuts a part of the resultant bird's-eye view image to store the cut part over the real time region R.

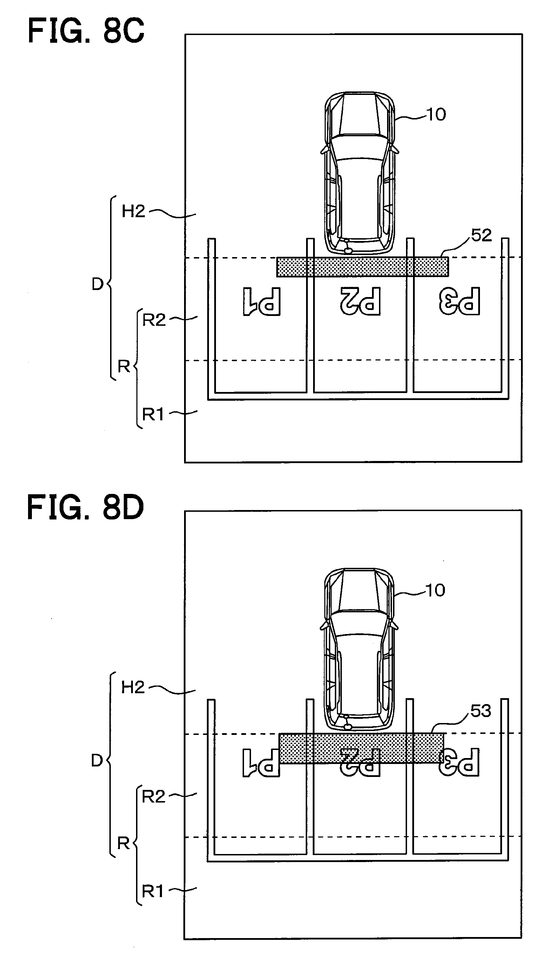

In this situation, as illustrated in FIG. 8C, a luminance change pattern image 52 in which the luminance change is considerable is included in the immediate rear of the subject vehicle 10 in the bird's-eye view images recorded in the second sub-real time region R2. Since the luminance change pattern image 52 is an image generated due to the same cause as that of the luminance change pattern image 51 appearing in the second sub-real time region R2 at the previous execution opportunity in the processing of FIG. 5, the arrangement to the subject vehicle 10 is substantially identical with the luminance change pattern image 51.

In Step 120 subsequent to Step 115, the luminance analysis is conducted on the second sub-real time region R2 including the luminance change pattern image 52. In this example, it is assumed that, as a result of the luminance analysis, a magnitude relationship between the amounts of change in the mean luminance L(Y) in the respective determination regions R21 to R26, and the above threshold value is identical with that in Step 120 of the previous execution opportunity.

Therefore, in subsequent Step 125, the determination region R21 is excluded as the history creation region, and only the regions R22 to R26 are selected as the history creation regions. Then, in Step 130, as illustrated in FIG. 9C, only the bird's-eye view images in the determination regions R22 to R26 are copied over the copy destination regions H12 to H16, respectively.

The bird's-eye view image copied from the second sub-real time region R2 in the previous execution opportunity in the processing of FIG. 5 moves to the copy destination region H 11 that is not an overwrite copy destination at this time through the processing of Step 145 at the previous execution opportunity in the processing of FIG. 5.

In subsequent Step 135, as illustrated in FIG. 8C, the image in the second sub-history region H2 is synthesized in the image of the current real time region R, and the image on which the vehicle image 10 is further transparently superimposed thereon is created as the display image D.

At this point, in Step 145 of the previous execution opportunity in FIG. 5, the position (relative arrangement to the virtual position of the subject vehicle 10) of the history creation images changes in the history region H. Then, the bird's-eye view image moves from the first sub-history region H1 (specifically, the copy destination regions H11 and H12) to the second sub-history region H2.

Therefore, in current Step 135, the history creation images in the second sub-history region H2 are displayed on the image display device in an arrangement corresponding to the relative arrangement of the history creation images changed in the history region H in Step 145 of the previous execution opportunity in FIG. 5.

Again, if the determination region R21 is included in the history creation region in Step 125 of the previous execution opportunity in FIG. 5, the bird's-eye view image (including the luminance change pattern image 51) is to have entered the second history region H2 in Step 145. If the bird's-eye view image has entered the second sub-history region H2, the luminance change pattern image 51 has been included in the display image D in Step 135 at the current execution opportunity in FIG. 5.

However, in this embodiment, the luminance change pattern image 51 is found out, and the determination region R21 including the found luminance change pattern image 51 is excluded from the history creation regions. As a result, the likelihood that the luminance change pattern image 51 continues to remain within the display image D to deteriorate the visibility of the display image D can be reduced.

In subsequent Step 140, as has already been described, the movement of the vehicle in the previous period for the control period is calculated. In this example, it is assumed that the subject vehicle 10 backs straight 30 cm (corresponding to a vertical width of the determination region) in this period. Therefore, in Step 145, the image moves forward within the history region H by the amount (30 cm) corresponding to the amount of movement of the subject vehicle 10. In this way, a relative arrangement of the history creation images to the virtual position of the subject vehicle 10 is determined according to the amount of movement of the vehicle.

Thereafter, when a fourth execution opportunity in the processing of FIG. 5 comes after the shift position switches to reverse, the control device 2 proceeds to Step 110 from Step 105. The control device 2 acquires the latest captured images from the in-vehicle camera 1 in Step 110, subjects the captured images to the bird's-eye view conversion in Step 115, and cuts a part of the resultant bird's-eye view image to store the cut part over the real time region R.

In this situation, as illustrated in FIG. 8D, in the bird's-eye view image recorded in the second sub-real time region R2, a luminance change pattern image 53 in which the luminance change is considerable is included in the immediate rear of the subject vehicle 10. The luminance change pattern image 53 is an image generated due to the same cause as that of the luminance change pattern image 52 appearing in the second sub-real time region R2 at the previous execution opportunity in the processing of FIG. 5.

However, the luminance change pattern images 50, 51, and 52 fall within the determination region R21 as a whole whereas the luminance change pattern image 53 goes over the determination region R21, and also enters the determination region R21. Causes that change the luminance change pattern image 53 with time as described above conceivably include a change in the direction of the subject vehicle 10, and a relative movement of a surrounding light source to the subject vehicle 10.

In Step 120 subsequent to Step 115, the luminance analysis is conducted on the second sub-real time region R2 including the luminance change pattern image 53. In this example, as a result of the luminance analysis, a magnitude relationship between the amount of change in the mean luminance L(Y) in the respective determination regions R21, and R23 to R26, and the threshold value is identical with that in Step 120 at the previous execution opportunity. However, it is assumed that as a result that the luminance change pattern image 53 protrudes into the determination region R22, the amount of change in the mean luminance L(Y) in the determination region R22 exceeds the threshold value.

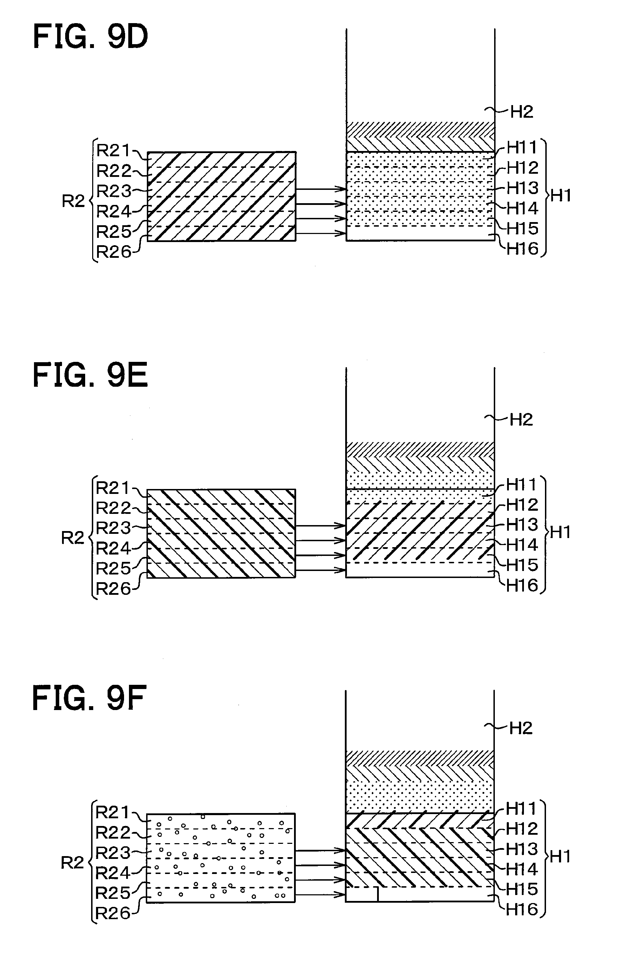

Therefore, in subsequent Step 125, not only the determination region R21, but also the determination region R22 are excluded as the history creation region, and only the determination regions R23 to R26 are selected as the history creation regions. Then, in Step 130, as illustrated in FIG. 9D, only the bird's-eye view images in the determination regions R23 to R26 are copied over the copy destination regions H 13 to H16, respectively.

The bird's-eye view image copied from the second sub-real time region R2 in the previous execution opportunity in the processing of FIG. 5 moves to the copy destination regions H11 and H12 that are not overwrite copy destinations at this time through the processing of Step 145 at the previous execution opportunity in the processing of FIG. 5.

In subsequent Step 135, as illustrated in FIG. 8D, the image in the second sub-history region H2 is synthesized in the image of the current real time region R, and the image on which the vehicle image 10 is further transparently superimposed is created as the display image D.

At this point, in Step 145 of the previous execution opportunity in FIG. 5, the position (relative arrangement to the virtual position of the subject vehicle 10) of the history creation images changes in the history region H. Then, the bird's-eye view image further moves from the first sub-history region H1 (specifically, the copy destination region H11) to the second sub-history region H2. As a result, the region including the bird's-eye view image increases in the second sub-history region H2.

Therefore, in current Step 135, the history creation images in the second sub-history region H2 are displayed on the image display device in an arrangement corresponding to the relative arrangement of the history creation images changed in the history region H in Step 145 of the previous execution opportunity in FIG. 5.

If the determination region R21 is included in the history creation region in Step 125 of the previous execution opportunity in FIG. 5, the bird's-eye view image (including the luminance change pattern image 52) is to have entered the second history region H2 in Step 145. If the bird's-eye view image has entered the second sub-history region H2, the luminance change pattern image 52 has been included in the display image D in Step 135 at the current execution opportunity in FIG. 5.

However, in this embodiment, the luminance change pattern image 52 is found out, and the determination region including the found luminance change pattern image 52 is excluded from the history creation regions. As a result, the likelihood that the luminance change pattern image 52 continues to remain within the display image D to deteriorate the visibility of the display image D can be reduced.

In subsequent Step 140, as has already been described, the movement of the vehicle in the previous period for the control period is calculated. In this example, it is assumed that the subject vehicle 10 backs straight 36 cm (corresponding to 1.2 times of a vertical width of the determination region) in this period. Therefore, in Step 145, the image moves forward within the history region H by the amount (36 cm) corresponding to the amount of movement of the subject vehicle 10. In this way, a relative arrangement of the history creation images to the virtual position of the subject vehicle 10 is determined according to the amount of movement of the vehicle.

Thereafter, when a fifth execution opportunity in the processing of FIG. 5 comes after the shift position switches to reverse, the control device 2 proceeds to Step 110 from Step 105. The control device 2 acquires the latest captured images from the in-vehicle camera 1 in Step 110, subjects the captured images to the bird's-eye view conversion in Step 115, and cuts a part of the resultant bird's-eye view image to store the cut part over the real time region R.

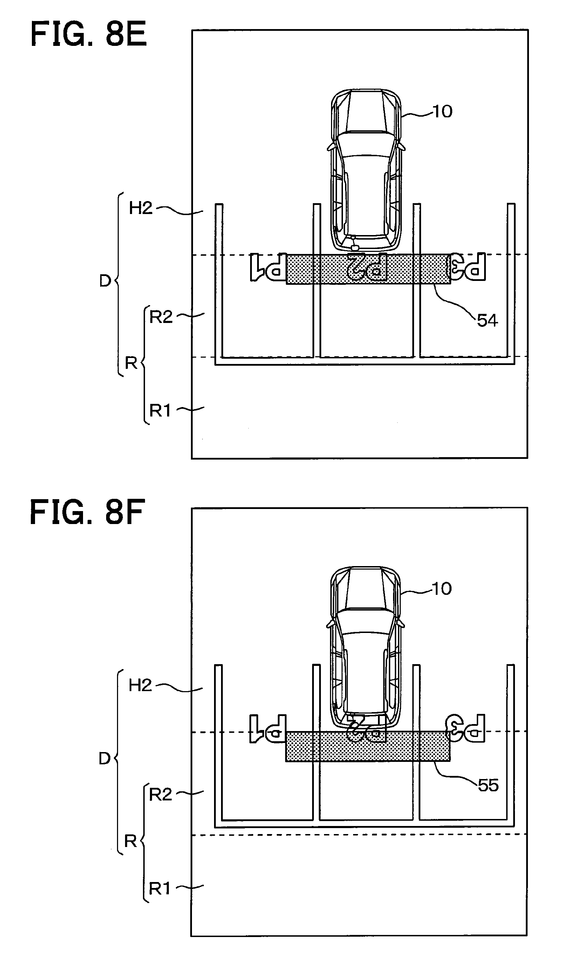

In this situation, as illustrated in FIG. 8E, a luminance change pattern image 54 in which the luminance change is considerable is included in the immediate rear of the subject vehicle 10 in the bird's-eye view images recorded in the second sub-real time region R2. Since the luminance change pattern image 54 is an image generated due to the same cause as that of the luminance change pattern image 53 appearing in the second sub-real time region R2 at the previous execution opportunity in the processing of FIG. 5, the arrangement, the size, and the luminance change are substantially identical with those in the luminance change pattern image 53.

In Step 120 subsequent to Step 115, the luminance analysis is conducted on the second sub-real time region R2 including the luminance change pattern image 54. In this example, it is assumed that, as a result of the luminance analysis, a magnitude relationship between the amounts of change in the mean luminance L(Y) in the respective determination regions R21 to R26, and the above threshold value is identical with that in Step 120 of the previous execution opportunity.

Therefore, in subsequent Step 125, the determination regions R21 and R22 are excluded as the history creation region, and only the determination regions R23 to R26 are selected as the history creation regions. Then, in Step 130, as illustrated in FIG. 9E, only the bird's-eye view images in the determination regions R23 to R26 are copied over the copy destination regions H 13 to H16, respectively.

The bird's-eye view image copied from the second sub-real time region R2 in the previous and second previous execution opportunities in the processing of FIG. 5 moves to the copy destination regions H11 and H12 that are not overwrite copy destinations at this time through the processing of Step 145 at the previous and second previous execution opportunities in the processing of FIG. 5.

In subsequent Step 135, as illustrated in FIG. 8E, the image in the second sub-history region H2 is synthesized in the image of the current real time region R, and the image on which the vehicle image 10 is further transparently superimposed is created as the display image D.

At this point, in Step 145 of the previous execution opportunity in FIG. 5, the position (relative arrangement to the virtual position of the subject vehicle 10) of the history creation images changes in the history region H. Then, the bird's-eye view image moves from the first sub-history region H1 (specifically, the copy destination regions H11 and 12) to the second sub-history region H2. As a result, the region including the bird's-eye view image increases in the second sub-history region H2.

Therefore, in current Step 135, the history creation images in the second sub-history region H2 are displayed on the image display device in an arrangement corresponding to the relative arrangement of the history creation images changed in the history region H in Step 145 of the previous execution opportunity in FIG. 5.

If the determination region R21 is included in the history creation region in Step 125 of the previous execution opportunity in FIG. 5, the bird's-eye view image (including the luminance change pattern image 53) is to have entered the second history region H2 in Step 145. If the bird's-eye view image has entered the second sub-history region H2, the luminance change pattern image 53 has been included in the display image D in Step 135 at the current execution opportunity in FIG. 5.

Further, if the determination region R22 is included in the history creation region in Step 125 of the second previous execution opportunity in FIG. 5, the bird's-eye view image (including the luminance change pattern image 52) is to enter the second history region H2 in Step 145. If the bird's-eye view image has entered the second sub-history region H2, the luminance change pattern image 52 has been included in the display image D in Step 135 at the current execution opportunity in FIG. 5.

However, in this embodiment, the luminance change pattern images 52 and 53 are found out, and the determination regions including the found luminance change pattern images 52 and 53 are excluded from the history creation regions. As a result, the likelihood that the luminance change pattern images 52 and 53 continue to remain within the display image D to deteriorate the visibility of the display image D can be reduced.

In subsequent Step 140, as has already been described, the movement of the vehicle in the previous period for the control period is calculated. In this example, it is assumed that the subject vehicle 10 backs straight 30 cm (corresponding to a vertical width of the determination region) in this period. Therefore, in Step 145, the image moves forward within the history region H by the amount (30 cm) corresponding to the amount of movement of the subject vehicle 10. In this way, a relative arrangement of the history creation images to the virtual position of the subject vehicle 10 is determined according to the amount of movement of the vehicle.

Thereafter, when a sixth execution opportunity in the processing of FIG. 5 comes after the shift position switches to reverse, the control device 2 proceeds to Step 110 from Step 105. The control device 2 acquires the latest captured images from the in-vehicle camera 1 in Step 110, subjects the captured images to the bird's-eye view conversion in Step 115, and cuts a part of the resultant bird's-eye view image to store the cut part over the real time region R.

In this situation, as illustrated in FIG. 8F, a luminance change pattern image 55 in which the luminance change is considerable is included in the immediate rear of the subject vehicle 10 in the bird's-eye view images recorded in the second sub-real time region R2. Since the luminance change pattern image 55 is an image generated due to the same cause as that of the luminance change pattern image 54 appearing in the second sub-real time region R2 at the previous execution opportunity in the processing of FIG. 5, the arrangement, the size, and the luminance change are substantially identical with those in the luminance change pattern image 54.

In Step 120 subsequent to Step 115, the luminance analysis is conducted on the second sub-real time region R2 including the luminance change pattern image 54. In this example, it is assumed that, as a result of the luminance analysis, a magnitude relationship between the amounts of change in the mean luminance L(Y) in the respective determination regions R21 to R26, and the above threshold value is identical with that in Step 120 of the previous execution opportunity.

Therefore, in subsequent Step 125, the determination regions R21 and R22 are excluded as the history creation region, and only the determination regions R23 to R26 are selected as the history creation regions. Then, in Step 130, as illustrated in FIG. 9F, only the bird's-eye view images in the determination regions R23 to R26 are copied over the copy destination regions H 13 to H16, respectively.

The bird's-eye view image copied from the second sub-real time region R2 in the previous and second previous execution opportunities in the processing of FIG. 5 moves to the copy destination regions H11 and H12 that are not overwrite copy destinations at this time through the processing of Step 145 at the previous and second previous execution opportunities in the processing of FIG. 5.

In subsequent Step 135, as illustrated in FIG. 8F, the image in the second sub-history region H2 is synthesized in the image of the current real time region R, and the image on which the vehicle image 10 is further transparently superimposed is created as the display image D.

At this point, in Step 145 of the previous execution opportunity in FIG. 5, the position (relative arrangement to the virtual position of the subject vehicle 10) of the history creation images changes in the history region H. Then, the bird's-eye view image further moves from the first sub-history region H1 (specifically, the copy destination region H11) to the second sub-history region H2. As a result, the region including the bird's-eye view image increases in the second sub-history region H2.

Therefore, in current Step 135, the history creation images in the second sub-history region H2 are displayed on the image display device in an arrangement corresponding to the relative arrangement of the history creation images changed in the history region H in Step 145 of the previous execution opportunity in FIG. 5.

If the determination region R21 is included in the history creation region in Step 125 of the previous execution opportunity in FIG. 5, the bird's-eye view image (including the luminance change pattern image 54) is to have entered the second history region H2 in Step 145. If the bird's-eye view image has entered the second sub-history region H2, the luminance change pattern image 54 has been included in the display image D in Step 135 at the current execution opportunity in FIG. 5.

Further, if the determination region R22 is included in the history creation region in Step 125 of the second previous execution opportunity in FIG. 5, the bird's-eye view image (including the luminance change pattern image 53) is to have entered the second history region H2 in Step 145. If the bird's-eye view image has entered the second sub-history region H2, the luminance change pattern image 53 has been included in the display image D in Step 135 at the current execution opportunity in FIG. 5.

However, in this embodiment, the luminance change pattern images 53 and 54 are found out, and the determination regions including the found luminance change pattern images 53 and 54 are excluded from the history creation regions. As a result, the likelihood that the luminance change pattern images 53 and 54 continue to remain within the display image D to deteriorate the visibility of the display image D can be reduced.

As already described, the movement of the vehicle in the period of the previous control period is calculated in subsequent Step 140, and the image moves forward within the history region H by the amount corresponding to the movement of the subject vehicle 10 in Step 145. In this way, a relative arrangement of the history creation images to the virtual position of the subject vehicle 10 is determined according to the amount of movement of the vehicle.

Thereafter, the processing in Steps 105 to 145 of FIG. 5 is repeated for each of the control periods while the shift position continues to be reverse.

As described above, the control device 2 according to this embodiment sequentially acquires the captured images from the in-vehicle camera 1 to subject the captured images to the bird's-eye view conversion (Steps 110, 115); calculates the amounts of change in luminance within the plural determination regions R21 to R26 in each of the captured images (Step 120); selects the determination regions in which the amount of change in luminance is smaller than the given threshold value as the history creation regions among the plural determination regions on the basis of the calculation results, and excludes the determination regions in which the amount of change in luminance is equal to or larger than the given threshold value continuously from the determination region R21 from the history creation regions (Step 125); and allows the images within the history creation regions to be displayed on the image display device 3 together with the vehicle image in a viewpoint of overlooking the vehicle from above, and changes a relative arrangement of the images in the history creation regions to the vehicle image according to the amount of movement of the vehicle (Steps 135, 140, 145).

As described above, the vehicle surrounding image display control device that allows the photographed images within the history creation regions to be displayed on the image display device together with the vehicle image in the viewpoint of overlooking the vehicle from above, and changes the relative arrangement of the captured images in the history creation regions to the vehicle image according to the amount of movement of the vehicle, the amounts of change in luminance within the plural determination regions R21 to R26 in each of the captured images are calculated; the determination regions in which the amount of change in luminance is smaller than the given threshold value are selected as the history creation regions; and the determination regions in which the amount of change in luminance is equal to or larger than the given threshold value are excluded from the history creation regions. With this configuration, the likelihood that the luminance change patterns in the vicinity of the subject vehicle are enlarged in the display image together with the movement of the vehicle can be reduced.

Also, the control device 2 stores the captured images acquired from the in-vehicle camera 1 in the given real time region R, stores the history creation images selected on the basis of the amount of change in luminance of the images within the plural determination regions R21 to R26 set within the real time region R in the first sub-history region H1 of the history region values H, moves the history creation images within the first sub-history region H1 to the second sub-history region H2 in the history region H according to the amount of movement of the vehicle, and allows the images within the second sub-history region and the images within the real time region R to be displayed on the image display device 3.

Therefore, as in the conventional art, since the history synthesis can be conducted with the use of the real time region R and the history region H, an increase in memory usage can be suppressed, and an increase in the processing load can be suppressed.

### (Other Embodiments)

(1) In the above embodiment, the six determination regions R21 to R26 obtained by dividing the second sub-real time region R2 into six equal parts are set, and the luminance analysis and the selection of the history creation regions are conducted with those set determination regions R21 to R26 as units. Those determination regions R21 to R26 do not overlap with each other.

However, the plural determination regions that are units of the luminance analysis and the selection of the history creation regions are not limited to the above configurations, but plural determination regions in which ranges of the determination regions adjacent to each other partially overlap with each other may be applied.

(2) In the above embodiment, the display image D is obtained by synthesizing the images in the second sub-history region H2, the images in the real time region R, and the subject vehicle 10. However, the display image D may not be limited to this configuration.

For example, the display image D may be obtained by synthesizing the images within the second sub-history region H2, the images within the first sub-history region H1, the images within the first sub-real time region R1, and the subject vehicle 10. That is, an area that can be captured by the in-vehicle camera 1 may be also displayed with the use of the images other than the latest captured images.

Also, the display image D may be obtained by synthesizing only the images within the second sub-history region H2 and the subject vehicle 10.

(3) Also, in the above embodiment, the luminance analysis is conducted on the captured images (that is, bird's-eye view images) that have been subjected to the bird's-eye view conversion. Alternatively, the luminance analysis and the selection of the history creation regions may be conducted on the captured images that have not yet been subjected to the bird's-eye view conversion. In the former, since the determination regions are rectangular, the processing load is lower.

(4) Also, in the above embodiment, the amount of change in the mean luminance L(Y) within the determination regions is applied as the amount of change in luminance within the respective determination regions. However, the present invention is not limited to this configuration.

(5) Also, in this embodiment, in the respective execution opportunities of the processing in FIG. 5, the luminance analysis is conducted on the bird's-eye view image (one mode of those captured images) in which the captured images acquired in Step 110 are subjected to the bird's-eye view conversion, and the history creation regions are determined according to the luminance analysis results.

However, the configuration may not be always limited to the above configuration. For example, in the processing of FIG. 5, in the first execution opportunity after the shift position becomes reverse, the processing of Steps 110 to 145 is conducted, and in the second and subsequent execution opportunities, the processing in Steps 120 and 125 is not conducted, but only the processing in Steps 110, 115, 130, 135, 140, and 145 may be conducted. In this case, the second and subsequent execution opportunities, the history creation regions determined in Step 125 in the first execution opportunity is repetitively used.

In the first execution opportunity after the shift position becomes reverse, the processing in Steps 130 to 145 may not be executed. In this case, the target captured images (bird's-eye view image) for determining the history creation regions are another captured image different from the captured images (bird's-eye view images) that are copied into the first sub-history region H1 as the history creation images.

(6) In the above respective embodiments, the in-vehicle camera 1 repetitively images the given area in the rear of the vehicle. Alternatively, the in-vehicle camera 1 may repetitively image a given area in front of the vehicle. In this case, in the present specification, the front and rear of the vehicle are read while being replaced with each other.

While the present disclosure has been described with reference to embodiments thereof, it is to be understood that the disclosure is not limited to the embodiments and constructions. The present disclosure is intended to cover various modification and equivalent arrangements. In addition, while the various combinations and configurations, other combinations and configurations, including more, less or only a single element, are also within the spirit and scope of the present disclosure.

## Claims

1. A vehicle surrounding image display control device comprising:
an acquisition device (110, 115) that sequentially acquires captured images from an in-vehicle camera (1) that repetitively shoots a surrounding image of a vehicle;
a luminance analyzer (120) that calculates a change amount of luminance in each of a plurality of determination regions (R21 to R26) in each captured image;
a history creation region determination device (125) that selects one of the determination regions, in which the change amount of luminance is smaller than a given threshold value, as a history creation region, and excludes another one of the determination regions, in which the change amount of luminance is equal to or larger than the given threshold value, from the history creation region, according to a calculation result of the luminance analyzer; and
a display control device (135, 140, 145) that controls an image display device (3) to display a history creation image in the history creation region together with a vehicle image in each of the captured images at a viewpoint of overlooking from above of the vehicle, changes a relative arrangement of the history creation image with respect to the vehicle image according to a movement amount of the vehicle based on vehicle behavior information input from the vehicle, and displays the relative arrangement.

2. The vehicle surrounding image display control device according to claim 1,
wherein the acquisition device (110, 115) stores the captured images acquired from the in-vehicle camera in a given real time region (R) of a memory,
wherein the luminance analyzer calculates the change amount of luminance within the plurality of determination regions in the captured images stored in the real time region (R),
wherein the display control device stores the history creation image in the history creation region in a first sub-history region (H1) of a history region (H) in the memory,
wherein the display control device moves the history creation image in the first sub-history region (H1) to a second sub-history region (H2) of the history region according to the movement amount of the vehicle, and
wherein the display control device controls the image display device to display an image in the second sub-history region.

3. The vehicle surrounding image display control device according to claim 1 or 2,
wherein one of the determination regions, in which the change amount in luminance is equal to or larger than the given threshold value, disposed continuously from a determination region corresponding to a position closest to the vehicle to a rear end of the vehicle is excluded from the history creation region, and
wherein another one of the determination regions, in which the change amount in luminance is smaller than the given threshold value, being closest to the vehicle, and further another one of the determination regions corresponding to a position farther from the vehicle than the another one of the determination regions are included in the history creation region.

4. A vehicle surrounding image display method comprising:
sequentially acquiring captured images from an in-vehicle camera (1) that repetitively shoots a surrounding image of a vehicle;
calculating each change amount of in luminance within a plurality of determination regions (R21 to R26) in each captured image;
selecting one of the determination regions, in which the change amount in luminance is smaller than a given threshold value, as a history creation region, and excluding another one of the determination regions, in which the change amount in luminance is equal to or larger than the given threshold value, from the history creation region, according to a calculation result of the change amount in luminance; and
controlling an image display device (3) to display a history creation image in the history creation region together with a vehicle image in each captured image at a viewpoint of overlooking from above of the vehicle, changing a relative arrangement of the history creation image with respect to the vehicle image according to a movement amount of the vehicle based on vehicle behavior information input from the vehicle, and displaying the relative arrangement.

5. A non-transitory tangible computer-readable medium comprising instructions being executed by a computer, the instructions including a computer-implemented method for controlling a display of a vehicle surrounding image, the instructions including:
sequentially acquiring captured images from an in-vehicle camera (1) that repetitively shoots a surrounding image of a vehicle;
calculating each change amount of luminance within a plurality of determination regions (R21 to R26) in each captured image;
selecting one of the determination regions, in which the change amount in luminance is smaller than a given threshold value, as history creation region, and excluding another one of the determination regions, in which the change amount in luminance is equal to or larger than the given threshold value, from the history creation region, according to a calculation result of the change amount in luminance; and
controlling an image display device (3) to display a history creation image in the history creation region together with a vehicle image in each of the captured images at a viewpoint of overlooking from above of the vehicle, changing a relative arrangement of the history creation image with respect to the vehicle image according to a movement amount of the vehicle based on vehicle behavior information input from the vehicle, and displaying the relative arrangement.

6. A vehicle surrounding image display control device comprising:
an acquisition device (110, 115) that sequentially acquires captured images from an in-vehicle camera (1) that repetitively shoots a surrounding image of a vehicle;
a memory having a real time region (R) that stores each captured image acquired from the in-vehicle camera and a history region (H) that stores the history images;
a luminance analyzer (120) that calculates each change amount of luminance within a plurality of determination regions (R21 to R26) in each captured image stored in the real time region (R);
a history creation region determination device (125) that selects one of the determination regions, in which the change amount in luminance is smaller than a given threshold value, as history creation regions, and excludes another one of the determination regions, in which the change amount in luminance is equal to or larger than the given threshold value, from the history creation region, according to a calculation result of the luminance analyzer; and
a display control device (135, 140, 145) that stores a history creation image of the history creation region in a first sub-history region (H1) of the history region (H) of the memory, overwrites the history creation image of the first sub-history region (H1) in a second sub-history region (H2) of the history region (H) of the memory according to a movement amount of the vehicle based on vehicle behavior information input from the vehicle, and controls an image display device (3) to display the history image of the second sub-history region and the history image of the first sub-history region at a viewpoint of overlooking from above of the vehicle.
